Europäisches Patentamt

European Patent Office

Office européen des brevets

(11) Numéro de publication : **0 461 970 A1**

## (12) DEMANDE DE BREVET EUROPEEN

(21) Numéro de dépôt : **91401497.2**

(22) Date de dépôt : **07.06.91**

(51) Int. Cl.$^5$ : **C09K 9/00, G02F 1/17**

(30) Priorité : **11.06.90 FR 9007227**

(43) Date de publication de la demande :
**18.12.91 Bulletin 91/51**

(84) Etats contractants désignés :
**DE ES GB IT**

(71) Demandeur : **CENTRE NATIONAL DE LA RECHERCHE SCIENTIFIQUE**
**15, qual Anatole France**
**F-75007 Paris (FR)**

(72) Inventeur : **Gillet, Pierre-Alain**
**1 Square Van Gogh**
**F-25000 Besancon (FR)**
Inventeur : **Fourquet, Jean-Louis**
**28, Ter, rue d'Ussé**
**F-72000 Le Mans (FR)**
Inventeur : **Bohnke, Odile**
**9, rue Stendhal**
**F-25000 Besancon (FR)**

(74) Mandataire : **Mongrédien, André et al**
**c/o BREVATOME 25, rue de Ponthieu**
**F-75008 Paris (FR)**

(54) Nouveaux matériaux électrochromes et leur procédé de préparation.

(57)    L'invention concerne de nouveaux matériaux électrochromes et leur procédé de préparation.

Ces matériaux sont constitués par au moins un oxyhydroxyde de métal de transition choisi parmi $H_2Ti_3O_7$ et $HNbWO_6$, $H_2O$ ou par une couche mince obtenue par évaporation sous vide de l'un au moins de ces oxyhydroxydes.

Ils peuvent être utilisés comme électrode électrochrome (5) dans une cellule électrochrome.

FIG. 16

EP 0 461 970 A1

La présente invention concerne de nouveaux matériaux électrochromes et leur procédé de préparation.

Un matériau électrochrome est un matériau dont le spectre d'absorption peut varier dans le domaine des longueurs d'onde correspondant à la lumière visible, de façon persistante et réversible, sous l'action d'un champ ou d'un courant électrique.

Ces matériaux peuvent trouver de nombreuses applications, en particulier dans le domaine des dispositifs d'affichage électro-optique et des écrans de densité optique modulable, par exemple des vitrages à teinte variable et modulable.

Les phénomènes électrochromes se divisent en deux catégories selon qu'ils sont de nature électronique (E.C.), ou de nature électrochimique (E.C.C.).

Les phénomènes de nature électronique (E.C.) peuvent correspondre à la formation de radicaux colorés, à un transfert de charge entre impuretés, à l'effet Franz-Keldysh (déplacement du bord de bandes d'absorption) ou à l'effet Stark (variation du moment dipolaire).

Les phénomènes de nature électrochimique (E.C.C.) peuvent correspondre à des réactions Redox, à une coloration produite par une variation de pH, à un dépôt électrolytique, à une réaction Redox couplée à une réaction chimique, ou encore à une réaction électrochimique au sein d'un oxyde d'un métal de transition.

De façon plus précise, la présente invention concerne des matériaux électrochromes à base d'oxyhydroxydes de métaux de transition dans lesquels les phénomènes électrochromes sont plutôt de nature électrochimique comme dans le cas des oxydes de métaux de transition, mais qui présentent certains avantages par rapport aux matériaux électrochromes connus à base d'oxydes de métaux de transition tels que $WO_3$.

En effet, bien que les matériaux électrochromes à base de $WO_3$ soient intéressants, ils présentent l'inconvénient d'avoir un potentiel de coloration cathodique très proche de celui correspondant au dégagement de l'hydrogène, ce qui est nuisible au bon fonctionnement d'une cellule électrochrome comportant un électrolyte protonique.

La présente invention a précisément pour objet de nouveaux matériaux électrochromes qui pallient cet inconvénient.

Selon l'invention, ces nouveaux matériaux électrochromes sont constitués par au moins un oxyhydroxyde de métal de transition choisi parmi $H_2Ti_3O_7$ et $HNbWO_6$, $H_2O$.

Ces nouveaux matériaux électrochromes peuvent être préparés facilement sous la forme de produit cristallisé par des méthodes de synthèse à basse température utilisant un échange ionique métal alcalin/$H^+$ sur des produits solides, avec en général une faible évolution de la structure cristalline.

Ainsi, dans le cas de $H_2Ti_3O_7$, on peut réaliser cette synthèse en partant d'un titanate de lithium $Li_2Ti_3O_7$, par échange ionique $Li^+/H^+$ en utilisant pour cet échange un acide inorganique tel que l'acide nitrique.

Dans le cas de $HNbWO_6$, $H_2O$, on peut partir d'un niobotungstate de métal alcalin tel que $\alpha$-$LiNbWO_6$ que l'on soumet à un échange $Li^+/H^+$ par mise en contact avec une solution d'acide sulfurique.

Ces réactions effectuées à basse température, par exemple à une température d'environ 80°C conduisent à des produits cristallisés qui présentent des propriétés électrochromes, mais qui sont difficiles à mettre en oeuvre dans les cellules électrochromes classiques, en raison de leur caractère de poudre et de leur manque de transparence.

Selon la présente invention, pour surmonter cet inconvénient, on forme à partir de ces poudres cristallisées, des couches minces de matériau électrochrome amorphe par un procédé simple d'évaporation sous vide sur un substrat approprié.

Aussi, la présente invention a également pour objet une couche de matériau électrochrome obtenue par évaporation sous vide d'au moins un oxyhydroxyde de métal de transition choisi parmi $H_2Ti_3O_7$ et $HNbWO_6$, $H_2O$.

Les couches de matériau électrochrome conformes à l'invention peuvent ainsi être formées soit à partir d'un seul oxyhydroxyde, soit à partir d'un mélange des deux oxyhydroxydes.

Les couches formées à partir d'un mélange des deux oxyhydroxydes sont intéressantes, en particulier en raison de leur potentiel de coloration qui est moins cathodique que celui de $WO_3$.

Les substrats utilisés pour le dépôt des couches peuvent être des substrats conducteurs, transparents ou réflecteurs, par exemple du $SnO_2$ déposé sur du verre, de l'oxyde mixte d'étain et d'indium ou de l'acier inoxydable.

D'autres caractéristiques et avantages de l'invention apparaîtront mieux à la lecture de la description qui suit, se référant au dessin annexe sur lequel :

- les figures 1 à 6 sont des courbes de voltamétrie cyclique obtenues avec des couches comportant un seul oxyhydroxyde, conformes à l'invention ;
- la figure 7 est un spectrogramme de Rutherford d'une couche obtenue par évaporation sous vide d'un mélange d'oxyhydroxydes de métaux de transition, conforme à l'invention ;
- la figure 8 est un spectrogramme de Rutherford d'une couche obtenue par co-évaporation de $WO_3$ et $TiO_2$,
- la figure 9 est une courbe voltampérométrique représentant l'intensité (en mA/cm²) en fonction du potentiel (en V/ECS) d'une cellule électrochrome à trois électrodes utilisant comme matériau électrochrome un mélange selon l'invention (NTTO) ou du $WO_3$ , une contre électrode de platine, une électrode de référence au calomel saturé (ECS) et un électrolyte liquide ($H_2SO_4$, $10^{-2}N$);

– la figure 10 est un diagramme illustrant le rendement de coloration, densité optique en fonction de la quantité d'électricite Q(en $mC/cm^2$), d'un matériau électrochrome conforme à l'invention (NTTO) par rapport au matériau électrochrome connu ($WO_3$);

– la figure 11 est une courbe voltampérométrique représentant l'intensité (en $mA/cm^2$) en fonction du potentiel (en V/acier inox) d'une cellule électrochrome à deux électrodes utilisant comme matériau électrochrome un mélange conforme à l'invention (NTTO) ou du $WO_3$, une contre électrode en acier inox poli et un électrolyte solide à base de polyoxyde d'éthylène et d'acide phosphorique;

– La figure 12 est un diagramme représentant la densité optique des matériaux électrochromes de la figure 11 en fonction du potentiel (en V/acier inox) ;

– la figure 13 est une courbe voltampérométrique représentant l'intensité (en $mA/cm^2$) en fonction du potentiel (en V/acier inox) d'une cellule électrochrome à deux électrodes utilisant comme matériau électrochrome, soit un mélange conforme à l'invention (NTTO), soit du $WO_3$ évaporé, soit un gel de $WO_3$, comme contre électrode une plaque d'acier inox poli, et un électrolyte solide à base de polyéthylène imine et d'acide phosphorique ;

– la figure 14 est une courbe représentant la densité optique des matériaux électrochromes de la figure 13 en fonction du potentiel de l'électrode (en V/acier inox); et

– les figures 15 et 16 sont des représentations schématiques d'une cellule électrochrome utilisant les matériaux électrochromes de l'invention.

**Example 1** : Préparation de $HNbWO_6$, $H_2O$.

a) Préparation de l'$\alpha$-$LiNbWO_6$

Pour cette préparation, on part du composé alcalin correspondant qui est l'$\alpha$-$LiNbWO_6$. On obtient celui-ci par synthèse à partir de $Li_2CO_3$, $Nb_2O_5$ et $WO_3$ qui sont des produits commerciaux, en mélangeant ceux-ci dans un rapport molaire : 1,1:1:2,2, et en soumettant le mélange à un traitement thermique pendant 24h à 780°C.

Le diffractogramme de la poudre obtenue indique une maille quadratique de type trirutile dont les paramètres sont :

a=4,6819 (2) Å ·

c=9,2757 (5) Å.

La présence des raies 00l avec l=2n+1 montre que le groupe est $P4_{21m}$(Z=2). Le groupe d'espace nous indique que les cations sont ordonnés le long de l'axe $\underline{c}$.

b) Préparation de $HNbWO_6$, $H_2O$.

On réalise un échange $Li^+/H^+$ sur la poudre de $\alpha$-$LiNbWO_6$ ainsi obtenue, dans de l'acide sulfurique $H_2SO_4$ 10N porté à reflux pendant plusieurs jours, et l'on obtient ainsi l'oxyhydroxyde de formule :

$$HNbWO_6, H_2O.$$

La composition correspondant à cette formule est confirmée par analyse thermogravimétrique.

**Example 2** : Préparation de $H_2Ti_3O_7$.

a) Préparation de $Li_2Ti_3O_7$.

Pour obtenir ce composé on part du titanate de lithium de formule $Li_2Ti_3O_7$ qui est obtenu en broyant intimement un mélange de $Li_2CO_3$ et de $TiO_2$dans le rapport molaire 1/3, en pastillant ensuite ce mélange sous une pression de 300MPa, en portant les pastilles à une température de 780°C pendant 24h pour décomposer $Li_2CO_3$ en $Li_2O$ et $CO_2$, en rebroyant ensuite les pastilles, en les repastillant et en les portant ensuite à 1050°C dans un four à moufle pendant 3 jours.

On obtient ainsi le titanate de lithium $Li_2Ti_3O_7$ qui a une structure du type ramsdellite $\tau$-$MnO_2$ dont la maille est orthorhombique, le groupe d'espace est Pnma, avec les paramètres de maille suivants :

a=9,5477 (4) Å
b=2,9422 (1) Å
c=5,0153 (2) Å .

La structure de ce matériau est constituée d'octaèdres réguliers (Ti, Li)$O_6$ laissant apparaître des tunnels dans lesquels sont insérés des ions lithium.

b) Préparation de $H_2Ti_3O_7$.

A partir de $Li_2Ti_3O_7$, on prépare l'oxyhydroxyde $H_2Ti_3O_7$ par échange $Li^+/H^+$.

Dans ce but, on traite 3g de $Li_2Ti_3O_7$ par 150ml d'acide nitrique 5M et on porte la suspension à reflux pendant 12h. On obtient ainsi une poudre blanche que l'on rince par 500ml d'eau chaude et que l'on sèche. Les ions lithium sont dosés sur le solide par spectrométrie d'émission de flammes, et l'on observe que 97% des ions lithium de départ ont été échangés.

Le spectre de poudre de diffraction des rayons X est tout d'abord indexe par isotypie avec celui de la phase mère $Li_2Ti_3O_7$. La maille est orthorhombique, le groupe d'espace est Pnma et les paramètres de maille sont :

a=9,7688 (8) Å
b=2,9213 (9) Å et
c=4,6745 (5) Å.

Ainsi, la réaction d'échange $Li^+/H^+$ sur $Li_2Ti_3O_7$ est globalement topotactique. Le réseau d'ions oxyde est préservé pendant l'échange. En revanche, les octaèdres constituant les doubles chaînes deviennent déficitaires ; la formulation globale ramenée au type rutile étant $H_{0,5727}(Ti_{0,8575 \square 0,14250})O_2$.

Ainsi, le matériau obtenu est un oxyhydroxyde de métal de transition et il présente une structure cristalline susceptible d'accueillir des cations supplémentaires.

Les oxyhydroxydes obtenus dans les exemples 1 et 2 sont des matériaux électrochromes.

Pour une utilisation dans des dispositifs d'affichage ou des écrans de densité optique modulable, il est nécessaire de les mettre en oeuvre sous la forme de films. Ceci peut être obtenu en incorporant les poudres d'oxyhydroxyde dans des polymères tels que le polyméthacrylate de méthyle pour former un film d'épaisseur 50 à 100µm ou mieux encore en formant directement, selon l'invention, des films électrochromes transparents à partir des oxyhydroxydes par évaporation sous vide, d'épaisseur 1000 à 3000Å.

### Example 3 : Préparation d'une couche transparente par évaporation de $HNbWO_6$, $H_2O$.

On réalise l'évaporation sous vide de la poudre de $HNbWO_6$, $H_2O$ obtenue dans l'exemple 1 en utilisant un appareil de dépôt sous vide.

On place 400mg de poudre de $HNbWO_6$, $H_2O$ dans une nacelle en Ta dans l'appareil, puis on effectue un pompage jusqu'à atteindre une pression de $1,35.10^{-4}$ à $6,75.10^{-5}Pa$ et on la chauffe par effet Joule pour l'évaporer. La vapeur formée est ensuite condensée sur la surface d'un substrat transparent en verre recouvert de $SnO_2$, pour y former un film mince.

Le substrat a été soigneusement lavé, rincé et séché avant d'être disposé sur un porte-substrat situé à 15cm au dessus de la nacelle en Ta contenant la poudre à évaporer ; le porte substrat est soumis à un mouvement de rotation de vitesse constante (10trs/min).

La vitesse de dépôt est lente et typiquement de l'ordre de 0,2 à 0,5nm/s suivant la température de la source. La puissance fournie lors du chauffage de la nacelle est de 500 Watts pour le début de l'évaporation et inférieure à 1kWatt à la fin de celle-ci.

On obtient ainsi une couche transparente. Les propriétés optiques de la couche colorée sont différentes de celles que l'on obtient à partir de l'évaporation de $WO_3 + 1/2Nb_2O_5$. En effet, la couche colorée obtenue à partir de $HNbWO_6$, $H_2O$ présente une absorption maximale à 480 ± 10nm, alors que la couche colorée obtenue à partir de $WO_3 + 1/2 Nb_2O_5$ présente un maximum d'absorption à 390 ± 20nm.

### Exemple 4.

Dans cet exemple, on teste les propriétés électrochromes de la couche obtenue dans l'exemple 3 par évaporation sous vide de $HNbWO_6$, $H_2O$. Pour cet essai, on utilise une cellule comportant comme électrolyte du perchlorate de lithium 1M dissous dans du carbonate de propylène, une contre-électrode en platine, une électrode de référence constituée d'un fil d'argent en contact avec une solution de perchlorate d'argent 0,01M dissous dans du carbonate de propylène, et une électrode électrochrome constituée par le substrat revêtu par évaporation sous vide de $HNbWO_6$, $H_2O$ obtenu dans l'exemple 3.

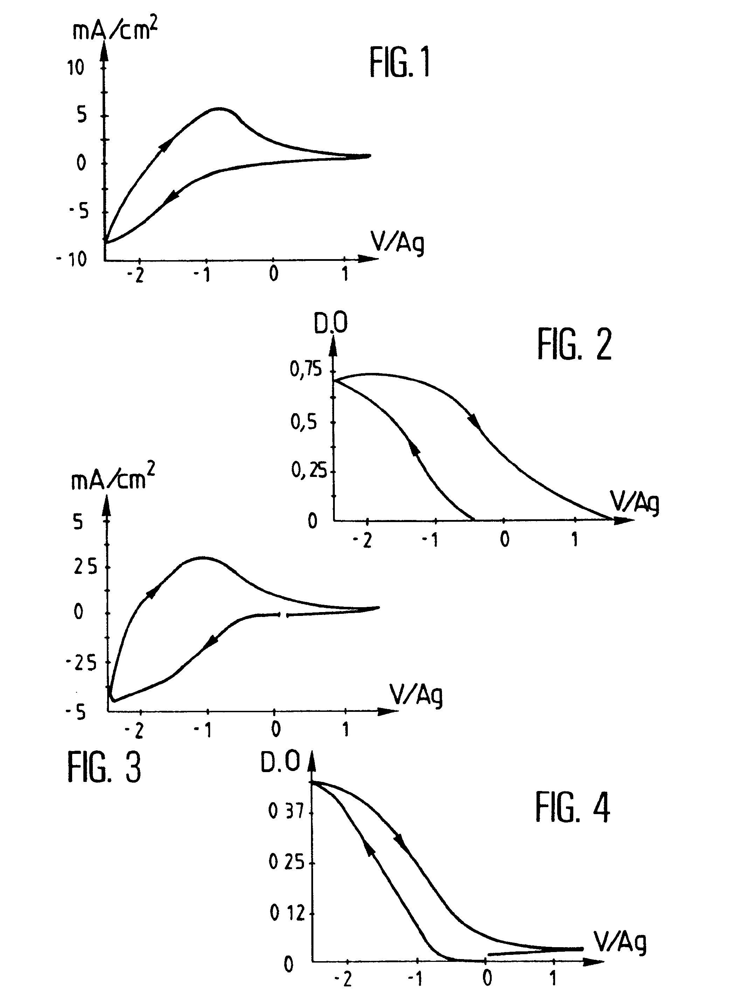

Les figures 1 et 2 représentent les courbes de voltamétrie cyclique obtenues dans cette cellule avec une vitesse de balayage de 0,1 V/s.

La figure 1 est la courbe de voltampérométrie, c'est-à-dire la variation d'intensité (en $mA/cm^2$) en fonction du potentiel appliqué à l'électrode (en V/Ag).

La figure 2 représente la densité optique (D.O) de la couche en fonction de la tension appliquée à l'électrode (en V/Ag). Les mesures de densité optique ont été faites en lumière monochromatique à 632,8nm.

Sur ces figures, on constate que la réaction est réversible.

### Exemple 5. Préparation d'une couche transparente par évaporation de $H_2Ti_3O_7$.

On prépare comme dans l'exemple 3 une couche transparente par évaporation sous vide de $H_2Ti_3O_7$ sur une électrode transparente en $SnO_2$. On teste les propriétés de cette électrode dans une cellule électrochrome comprenant le même électrolyte, la même contre-électrode et la même électrode de référence que la cellule utilisée dans l'exemple 4. Les résultats obtenus sont représentés sur les figures 3 et 4.

La figure 3 est la courbe de voltampérométrie, c'est-à-dire la variation d'intensité (en $mA/cm^2$) traversant la cellule en fonction du potentiel applique à l'électrode (en V/Ag). La vitesse de balayage en tension est de 0,1V/s.

La figure 4 représente la densité optique de l'électrode en fonction du potentiel (en V/Ag).

Les courbes montrent que l'on obtient la réversibilité optique et électrique au cours d'un cycle.

Par ailleurs, on remarque que lors du passage coloration - décoloration de $H_2Ti_3O_7$, l'hystérésis est très faible.

## Exemple 6.

On prépare comme dans l'exemple 5 une électrode pour cellule électrochrome comportant une plaque de $SnO_2$ recouverte par évaporation sous vide de $H_2Ti_3O_7$ et on teste les propriétés de cette électrode dans une cellule électrochrome à trois électrodes comportant comme électrolyte de l'acide sulfurique 0,1N, une contre-électrode en platine et une électrode de référence au sulfate mercureux saturée en $K_2SO_4$ (ESS). On réalise les courbes de voltampérométrie avec une vitesse de balayage en tension de 0,1 V/s et des tensions limites de -1 et +1V par rapport à l'électrode de référence.

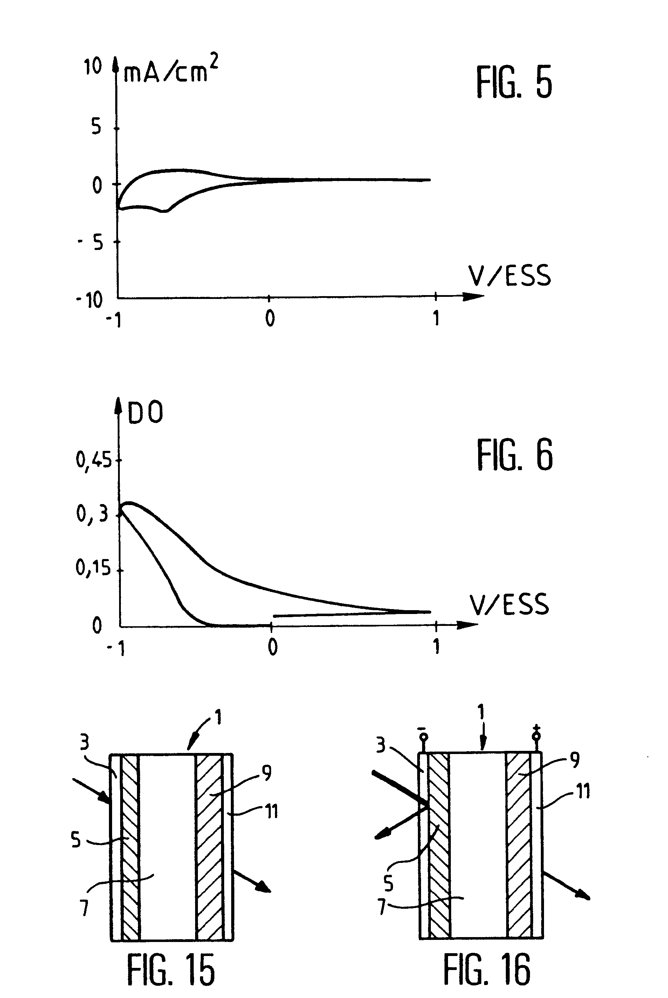

Les figures 5 et 6 illustrent les résultats obtenus.

La figure 5 est la courbe voltampérométrique I (en $mA/cm^2$) en fonction de V (en V/ESS),

la figure 6 est la courbe de densité optique (DO) en fonction du potentiel (en V/ESS).

Comme précédemment, on constate que la réaction est réversible.

## Exemple 7.

Dans cet exemple on prépare une couche électrochrome à partir d'un mélange de 80% en moles de $H_2Ti_3O_7$ obtenu dans l'exemple 2 et de 20% en moles de $HNbWO_6$, $H_2O$ obtenu dans l'exemple 1.

Cette couche est formée par co-évaporation des deux oxyhydroxydes métalliques dans les mêmes conditions que celles de l'exemple 3, en utilisant comme substrat un verre recouvert de $SnO_2$ comme dans l'exemple 3.

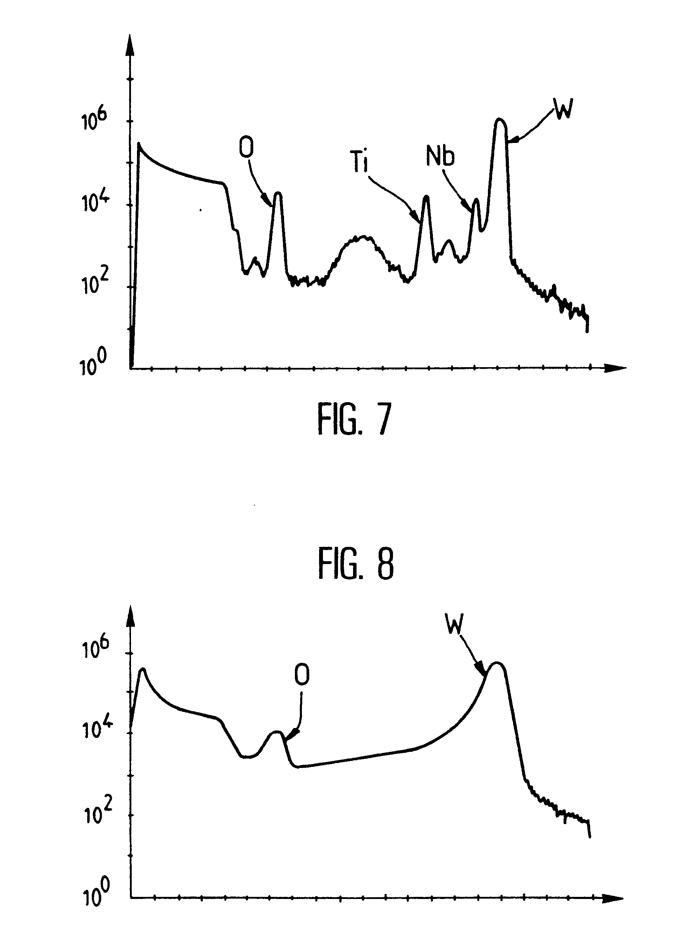

La composition précise de la couche déposée a été déterminée par rétrodiffusion élastique de particules $\alpha$ (spectrométrie Rutherford). Le résultat obtenu est donné sur la figure 7.

Sur cette figure 7 qui représente le spectrogramme de Rutherford obtenu, on voit que les principaux constituants de la couche sont l'oxygène, le titane, le niobium et le tungstène. Cette couche amorphe possède une composition sous-stoechiométrique correspondant à la formule :

$$Nb_1W_{21}Ti_5O_{73}.$$

A titre comparatif, on a donné sur la figure 8 le spectrogramme de Rutherford obtenu avec une couche préparée par co-évaporation des oxydes stables correspondants $WO_3$ et $TiO_2$.

Comme on peut le voir sur cette figure 8, la couche obtenue n'a pas la même composition puisque dans ce cas, il s'agit d'un film mince sous-stoechiométrique d'oxyde de tungstène uniquement.

## Exemple 8.

Dans cet exemple on prépare comme dans l'exemple 7 une couche de matériau électrochrome amorphe par évaporation sous vide d'un mélange de 50% en moles de $H_2Ti_3O_7$ et de 50% en moles de $HNbWO_6$, $H_2O$.

La composition du matériau formant la couche, déterminée par rétrodiffusion élastique de particules alpha, comme dans l'exemple 7, correspond à la formule :

$$Nb_{1,6}W_{23}Ti_{1,4}O_{74}.$$

## Exemple 9.

Dans cet exemple on utilise la couche de matériau électrochrome obtenu dans l'exemple 8 comme électrode dans une cellule électrochrome à trois électrodes comprenant un électrolyte constitué par $H_2SO_4$ 0,01N, une contre électrode en platine, et une électrode de référence au chlorure mercureux saturé en chlorure de potassium (ECS).

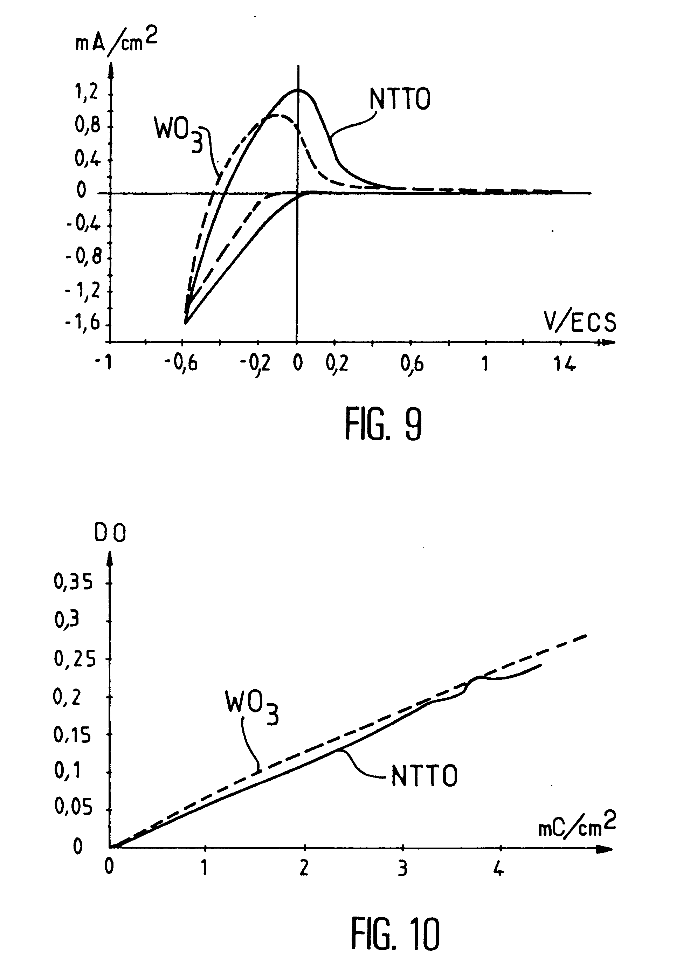

La figure 9 représente les courbes voltampérométriques obtenues dans cette cellule avec soit l'électrode électrochrome de l'exemple 8 NTTO (en trait plein), soit une électrode de $WO_3$, pour comparaison (en pointillés).

Sur cette figure on remarque que la coloration de la couche NTTO de l'invention commence à un potentiel plus faible que la coloration de $WO_3$, ce qui est particulièrement intéressant puisque l'on peut ainsi éviter le dégagement d'hydrogène en milieu acide.

La figure 10 représente les courbes de DO en fonction de la quantité d'électricité (en $mC/cm^2$) de la couche de l'invention et d'une couche de $WO_3$ ; on constate que les rendements de coloration de ces deux matériaux électrochromes (ou pentes de ces courbes) sont voisins.

## Exemple 10.

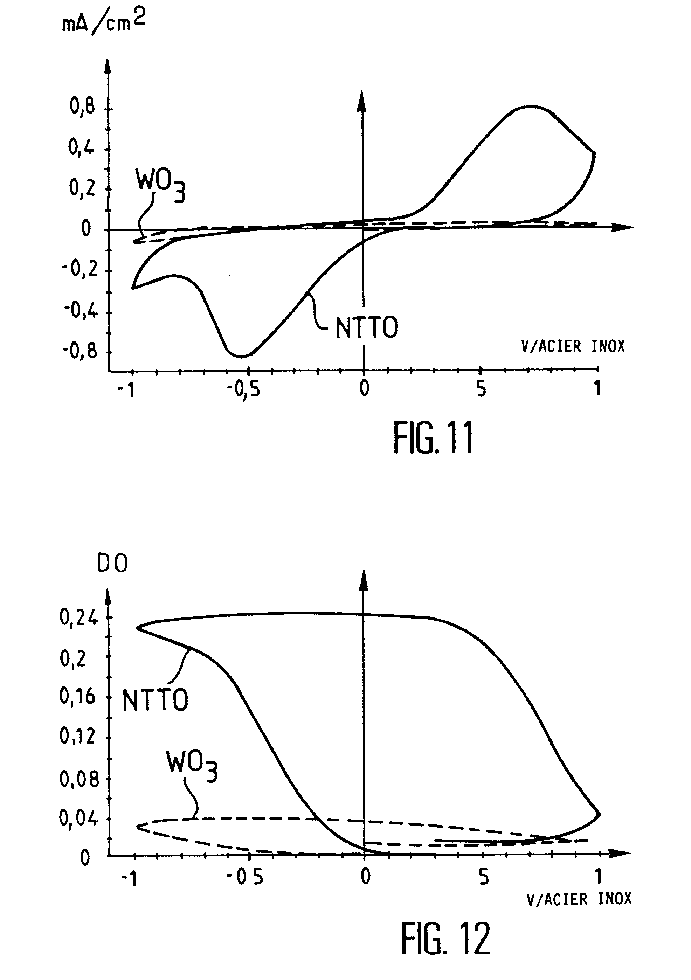

Dans cet exemple on teste les propriétés de la couche électrochrome obtenue dans l'exemple 8 en l'utilisant comme électrode dans une cellule électrochrome à deux électrodes comprenant un électrolyte solide à base de polyoxyde d'éthylène et d'acide phosphorique, et une contre électrode en acier inoxydable poli. On réalise les mêmes essais avec une couche électrochrome en $WO_3$ dans les mêmes conditions. Les résultats obtenus sont donnes sur les figures 11 et 12.

La figure 11 est la courbe voltampérométrique représentant l'intensité (en $mA/cm^2$) en fonction du potentiel (en V/acier inox). Sur cette figure, on voit que les domaines d'électrocoloration de la couche de l'invention NTTO (en trait plein) et de la couche de $WO_3$ (en pointillés) sont très différents. On constate également que le début de coloration de la couche de l'invention s'effectue à un potentiel plus faible que celui de la couche de $WO_3$.

La figure 12 représente la densité optique (DO) de la couche en fonction du potentiel appliqué (en V-

/acier inox) pour la couche en NTTO de l'invention et pour la couche en WO₃.

Sur cette figure, on voit clairement que de meilleurs résultats sont obtenus avec la couche de l'invention.

### Exemple 11.

Dans cet exemple on teste les propriétés de la couche électrochrome obtenue dans l'exemple 8 en l'utilisant comme électrode dans une cellule électrochrome à deux électrodes comprenant un électrolyte solide à base de polyethylène imine et de $H_3PO_4$, et une contre électrode en acier inoxydable poli.

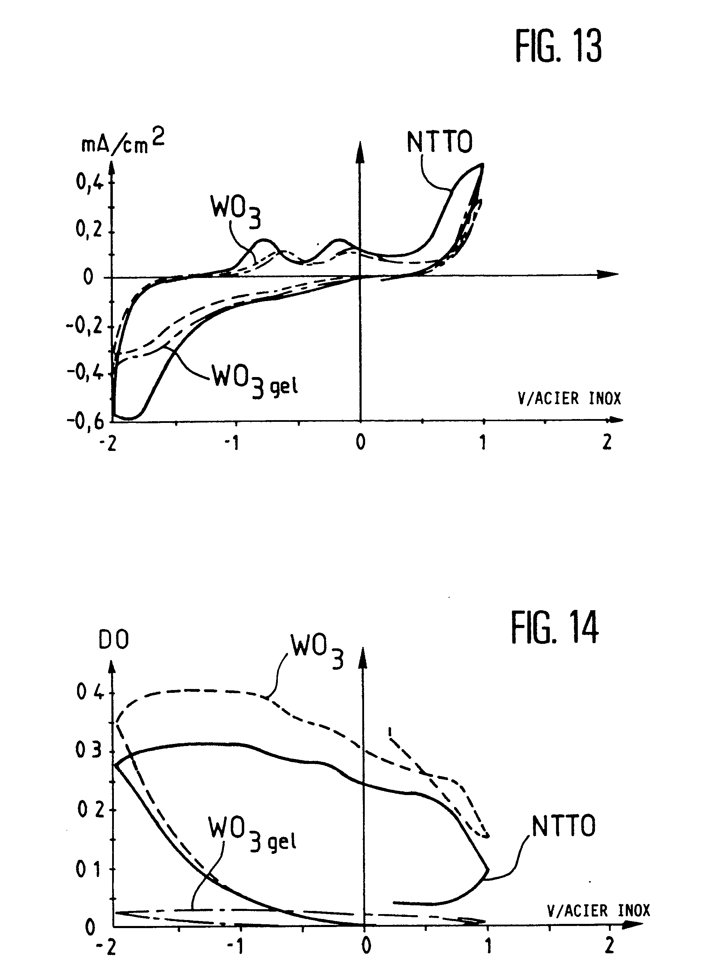

Les résultats obtenus sont donnés sur les figures 13 et 14.

La figure 13 représente les courbes voltampérometriques obtenues dans les mêmes conditions avec la couche de NTTO de l'invention (en trait plein), une couche en $WO_3$ évapore (en pointilles) et une couche de gel de $WO_3$ (en traits mixtes). On voit que les domaines d'électrocoloration sont différents.

La figure 14 représente la densité optique (DO) en fonction du potentiel (en V/acier inox) pour les trois électrodes électrochromes utilisées.

Les matériaux électrochromes de l'invention possèdent ainsi des avantages par rapport aux couches minces électrochromes connues et notamment $WO_3$, à savoir : un début de coloration moins cathodique, ou un domaine d'électrocoloration plus restreint, ce qui permet d'éviter le dégagement d'hydrogène en milieu acide. Par ailleurs, ces matériaux sont plus stables en milieu corrosif du fait de leur mode de préparation. D'un point de vue fondamental, les premières constatations semblent indiquer soit que la diffusion au sein du matériau est très rapide, soit qu'il s'agit d'un phénomène de surface. Enfin, ces matériaux présentent un pouvoir réflecteur plus important que celui de $WO_3$. Cette dernière propriété est très importante dans une application au vitrage car elle permet d'éviter l'échauffement du matériau au cours de l'absorption.

Les matériaux électrochromes de l'invention peuvent trouver de nombreuses applications, en particulier dans les cellules électrochromes et les écrans de densité optique modulable.

Sur les figures 15 et 16, on a représenté un tel écran. Cet écran comprend un récipient transparent isolant électrique (1) à l'intérieur duquel sont disposés successivement un conducteur transparent (3), une couche de matériau électrochrome (5), un électrolyte solide ou liquide (7), une contre-électrode (9) et un conducteur de courant (11), les conducteurs (3) et (11) pouvant être reliés à une source de courant électrique non représentée sur le dessin. Ainsi, lorsqu'on applique une différence de potentiel suffisante entre les conducteurs 3 et 11, le matériau électrochrome qui était transparent sur la figure 15 devient réflecteur ou opaque comme on peut le voir sur la figure 16 et les rayons lumineux par exemple des rayons solaires de haute énergie HES qui pouvaient traverser le panneau en l'absence de potentiel, comme le montrent les flèches de la figure 15, sont réfléchis ou absorbés comme l'indiquent les flèches de la figure 16.

Dans une cellule de ce type, on peut utiliser une contre-électrode en différents matériaux ; de préférence, on utilise des matériaux transparents tels que les oxydes d'étain, les oxydes d'indium, les oxydes de vanadium et l'oxyde d'iridium, en particulier les électrodes en oxyde mixte d'étain et d'indium (ITO).

Les électrolytes utilisés peuvent être des électrolytes liquides ou encore des électrolytes solides. A titre d'exemple d'électrolyte liquide, on peut citer l'acide sulfurique en solution aqueuse ou dans un mélange eau-glycérol et le perchlorate de lithium, de préférence dans un solvant organique tel que le carbonate de propylène ou l'éthylène glycol.

Les électrolytes solides peuvent être formés de polymères anhydres, par exemple les complexes d'oxyde de polyéthylène et d'acide phosphorique, de polyvinyl pyrrolidone et d'acide phosphorique, de polyéthylène imine et d'acide phosphorique, de polydioxolane et de $Li(CF_3SO_2)_2N$, et d'oxyde de polyéthylène et de $Li(CF_3SO_2)_2N$.

On peut aussi utiliser des complexes de polymères tels que l'oxyde polyéthylène et de sels de lithium tels que $LiClO_4$, $LiCF_3SO_3$.

Des electrolytes solides de ce type ont en particulier été décrits par Daniel Deroo "Electrochromic Windows and Displays Using Polymer Electrolytes" au deuxième Symposium on Polymer Electrolytes 14-16 juin 1989 à Sienne (Italie) et par jean-Claude Lasségues dans journal of Solid State Ionics 35 (1989) 17.

### Revendications

1. Matériau électrochrome constitué par $H_2Ti_3O_7$.

2. Couche de matériau électrochrome obtenue par évaporation sous vide d'au moins un matériau choisi parmi $H_2Ti_3O_7$ et $HNbWO_6$, $H_2O$.

3. Couche de matériau électrochrome obtenue par évaporation sous vide d'un mélange de 50% en moles de $H_2Ti_3O_7$ et de 50% en moles de $HNbWO_6$, $H_2O$.

4. Couche selon la revendication 3, caractérisée en ce que sa composition en Nb, W, Ti et O déterminée par rétrodiffusion élastique de particules α correspond à la formule :
$$Nb_{1,6}W_{23}Ti_{1,4}O_{74}.$$

5. Couche de matériau électrochrome obtenue par évaporation sous vide d'un mélange de 80% en moles de $H_2Ti_3O_7$ et de 20% en moles de $HNbWO_6, H_2O$.

6. Couche électrochrome selon la revendication 5, caractérisée en ce que sa composition en Nb, W, Ti et O déterminée par rétrodiffusion élastique de particules α correspond à la formule :
$$Nb_1W_{21}Ti_5O_{73}.$$

7. Oxyhydroxyde de titane de formule :
$$H_2Ti_3O_7$$
ayant une structure de type ramsdellite.

8. Procédé de préparation d'une couche de matériau électrochrome, caractérisé en ce qu'il comprend les étapes successives suivantes :
    a) préparer au moins un composé choisi parmi les oxyhydroxydes de métaux de transition de formule : $H_2Ti_3O_7$ ayant une structure de type ramsdellite et $HNbWO_6, H_2O$, et
    b) évaporer sous vide l'oxyhydroxyde ou un mélange des oxyhydroxydes préparés dans l'étape a).

9. Procédé selon la revendication 8, caractérisé en ce que dans l'étape a), on prépare l'oxyhydroxyde de titane de formule :
$$H_2Ti_3O_7$$
par échange ionique $H^+/Li$, à partir de titanate de lithium de formule :
$$Li_2Ti_3O_7$$
de structure ramsdellite.

FIG. 1

FIG. 2

FIG. 3

FIG. 4

FIG. 5

FIG. 6

FIG. 15

FIG. 16

FIG. 7

FIG. 8

FIG. 9

FIG. 10

FIG. 11

FIG. 12

FIG. 13

FIG. 14

**Office européen des brevets**

# RAPPORT DE RECHERCHE EUROPEENNE

Numero de la demande

EP    91 40 1497

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | CHEMICAL ABSTRACTS, vol. 107, no. 18, 1987 Columbus, Ohio, USA NALBANDYAN V.B. & AL: ""Rearrangement of the structure..."" ref. no. 167598R * abrégé * | 1, 7-9 | C09K9/00 G02F1/17 |
| X | CHEMICAL ABSTRACTS, vol. 109, no. 12, 1988 Columbus, Ohio, USA B.VASUDEVA & AL: ""Hydrogen niobium tungstate..."" ref. no. 103488P * abrégé * | 1 | |
| Y | FR-A-2527219 (CNRS) * revendications 1-12 * | 1 | |
| Y | FR-A-2344619 (ANVAR) * revendications 1-18 * | 1 | |
| A | DE-3-810923 (NIPPON KOGAKU) * colonne 1,2 * | 1 | **DOMAINES TECHNIQUES RECHERCHES (Int. Cl.5)** C09K G02F |

Le présent rapport a été établi pour toutes les revendications

| Lieu de la recherche | Date d'achèvement de la recherche | Examinateur |
|---|---|---|
| LA HAYE | 01 AOUT 1991 | DROUOT M.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................
& : membre de la même famille, document correspondant

EPO FORM 1503 03.82 (P0402)